# EUROPEAN PATENT SPECIFICATION

(11) **EP 2 079 874 B1**
(45) Date of publication and mention of the grant of the patent: **30.07.2014**
(21) Application number: 07821368.3
(22) Date of filing: 16.10.2007
(51) Int. Cl.: D21D 5/26, B01D 19/00

(54) **METHOD AND DEVICE FOR DEGASSING A SUSPENSION**
VERFAHREN UND VORRICHTUNG ZUR ENTGASUNG EINER SUSPENSION
PROCÉDÉ ET DISPOSITIF DE DÉGAZAGE D'UNE SUSPENSION

(30) Priority: 07.11.2006 EP 06123610
(43) Date of publication of application: 22.07.2009
(73) Proprietor: Sulzer Pumpen AG, 8401 Winterthur (CH)
(72) Inventor: VESALA, Reijo, 48300 Kotka (FI)
(74) Representative: Intellectual Property Services GmbH
(86) International application number: PCT/EP2007/061001
(87) International publication number: WO 2008/055762

(56) References cited:
- WO-A-97/36044
- US-A1- 3 421 622
- US-A1- 5 106 456
- US-A1- 6 098 658

## Description

### BACKGROUND OF THE INVENTION

The present invention relates to a method of and a system for removing gas from a gas-containing suspension of liquid and solid particles in a container. The method and apparatus according to the invention are especially suitable for use in connection with vertical intermediate containers or tanks used for homogenizing and diluting low or medium consistency process fluid in chemical and mechanical wood processing industry, but the invention is, of course, also suitable for use in other corresponding applications.

Gas can be present in the suspension of liquid and solid particles either as dissolved in the liquid or in the form of bubbles. The bubbles can be very small bubbles bound on the solid particles, bubbles captured in pockets formed by the particles, such as fibers, or free gas bubbles in the liquid. Dissolved gas separates from the liquid only if the pressure of the liquid is decreased or its temperature is raised. Therefore, in many applications gas dissolved in the liquid does not form a problem. By contrast, gas as bubbles in a suspension of liquid and solid particles can, for example, disturb pumping of the suspension, or prevent efficient homogenization thereof.

In chemical and mechanical wood processing industry, there are regularly tanks or containers, into which a process fluid having typically a consistency from about 3 % to about 12 %, most often from about 3 % to about 8 %, is introduced. Such fluid may contain from about 5 % to about 20 %, often from about 15 % to about 20 %, or even more, gas, typically air.

According to a conventional solution, the process fluid is introduced to the container through the roof of the container by using either a simple feed pipe or a feed pipe connected to a spreading device arranged in the top part of the container in order to distribute the incoming fluid evenly throughout the cross section of the container. These solutions have the drawback of a large amount of energy being used for pumping the fluid to the level of the top of the container. Moreover, gas may easily be mixed with the fluid when it drops down in the container. In order to avoid these problems, it is also known to feed process fluids via a vertical feed pipe through the bottom of the container, either below the surface of the suspension, or, as shown in U.S. Pat. No. 6,098,658, on the surface of the suspension by using a feed pipe with a number of openings at different distances from the bottom.

Often the container is also provided with a dilution liquid supply and one or more agitators to dilute and homogenize the process fluid. However, when the gas content of the suspension is high, its efficient homogenizing and pumping towards the next process stage may be difficult. These problems may be partly minimized or eliminated by using a pump which removes gas from the suspension when it is discharged from the container. An example of such a solution, which uses a partial flow of pumped medium, returned to the container, as a drive source for an ejector which separates gas from the pumped medium, is described in WO publication No. 97/36044.

U.S. Patent No. 5,106,456 discloses a method in which high consistency pulp including non-homogeneous pieces of pulp having pockets filled with air therebetween is homogenized and densified in a container by breaking up the pulp pieces to substantially eliminate the air pockets. A portion of the pulp may be recirculated from the outlet side of a discharge pump back to the container, either to the upper portion or to the bottom thereof.

Gas bubbles separating from a suspension in a container, for example, from a low or medium consistency process fluid in wood processing industry, may bring about that the bubbles ascending towards the surface of the suspension entrain a high amount of solid particles, such as fibers, to the surface. This may lead to the formation of a more or less permanent layer of solids on the surface of the suspension. New material dropped to the container through the top may penetrate this layer directly to the dilution layer in the lower part of the container, and may drift towards the discharge opening without mixing with the top layer. Correspondingly, new material introduced through the bottom below the surface may stay in the dilution layer and short-circuit to the discharge opening without ever mixing with the top layer. In either case, the surface layer is not mixed and changed properly, which may lead to gradual degradation of the functioning of the container.

Due to the above-mentioned and other problems caused by high gas content in a suspension of liquid and solids in a container, there is clearly a need for an improved method of and apparatus for removing gas from a gas-containing suspension of liquid and solids in a container.

### SUMMARY OF THE INVENTION

An object of the present invention is to provide a method of and an apparatus for removing gas from a gas-containing suspension of liquid and solids in a container.

In order to achieve this and other objects of the present invention, a method is provided, as described in the accompanying claims. Especially, according to the present invention, a method of removing gas from a gas-containing suspension of liquid and solids in a container is provided, the method comprising the steps of introducing gas-containing suspension of liquid and solids into the container so as to form a column of suspension with an upper surface in the container, withdrawing a first stream of suspension with a first pump from the column of suspension, discharging gas from the container, and recycling at least a portion of said first stream of suspension into the container upwards through the outlet end of a vertical first pipe, at a predetermined distance above the upper surface of the column of suspension so as to separate gas from the recycled suspension.

Additionally, according to the present invention, an apparatus for removing gas from a gas-containing suspension of liquid and solids in a container is provided, the apparatus comprising means for introducing gas-containing suspension of liquid and solids into the container so as to form a column of suspension with an upper surface in the container, a first pump for withdrawing a first stream of suspension from the column of suspension in the container, means for discharging gas from the container, and means for recycling at least a portion of said first stream of suspension into the container, comprising a vertical first pipe extending upwards at a predetermined distance above the upper surface of the column of suspension for separating gas from the recycled suspension.

The container may be an intermediate container for mixing a process fluid, whereby the container advantageously comprises one or more impellers to agitate the fluid in the container. The container may also be a dilution container of a process fluid, for example, low or medium consistency process fluid in chemical or mechanical wood processing industry, whereby the container comprises means for introducing dilution liquid, usually water, into the container.

Such a container naturally comprises primary means for introducing suspension of liquid and solids into the container from a previous process stage, such as chemical processing of the suspension, and primary means for discharging suspension of liquid and solids from the container to a subsequent process step, which may comprise, for example, washing or screening of a process fluid. According to the present invention, the container comprises means for recycling at least a portion of the suspension discharged from the container with the first pump back to the container.

By recycling the suspension in the container back to the container through a vertical pipe extending upwards at a predetermined distance above the upper surface of the column of suspension, a large amount of gas can be separated from the suspension. The gas is released to the gas phase above the upper surface of the suspension in the container, and will be discharged from the container either via an open top of the container or by using a pump to discharge the gas. Thereby, the amount of gas in the column of suspension in the container is reduced, and, correspondingly, the amount of gas rising upwards in the column of suspension is decreased. Thus, the tendency of forming a stagnant layer of solids in the container is reduced, and, for example, the suspension can be more efficiently homogenized.

The outlet end of the recycling pipe can be maintained at a predetermined distance above the upper surface of the column of suspension in the container by regulating the height of the column of suspension in the container by controlling the operation of the primary discharge pump with a suspension level indicator. Alternatively, it may in some applications be possible to use a feed pipe with multiple openings, as described in U.S. Pat. No. 6,098,658.

The first pump, used for discharging the suspension to be recycled, can also be used as a part of the means for discharging the suspension to the next process step. Then the discharged suspension is split to a first portion, to be recycled, and a second portion, to be conducted to the next process step. Such a configuration needs a reliable means to control the ratio of the two portions. Therefore, according to a preferred embodiment of the present invention, the first pump is used solely for recirculating suspension, and a second pump is used for discharging suspension from the container to a subsequent process step.

The original introducing of gas-containing suspension into the container can be performed by any suitable method, for example, by using a pipe ending below the upper surface of the column of suspension, or by using a conduit arranged at the upper part of the container, so as to distribute the suspension, preferably with a spreader device, above the upper surface of the column of suspension. However, according to a preferred embodiment of the present invention, the gas-containing suspension is originally introduced into the container through the same pipe used for reintroducing the recycled suspension into the container. By using this configuration, the gas-containing suspension is also originally introduced into the container at a predetermined distance above the upper surface of the column of suspension, and a large amount of gas is immediately separated from the suspension.

When introducing the suspension into the container upwards through the outlet end of the first pipe, at a suitable flow velocity and at a relatively small distance above the upper surface of the column of suspension, a large amount of gas is released from the suspension. The selected distance may vary, depending on the properties of the suspension and on the flow velocity of the suspension. Preferably, the distance is between about 0,05 m and about 0,4 m, even more preferably between about 0,05 m and about 0,2 m. The optimal distance depends on the properties of the suspension and, for example on the flow velocity used. In most cases, an optimal distance would be between 0,05 and 0,1 m, but especially if the column height is not completely stable, a somewhat higher distance may be needed. If the outlet end of the first pipe is even slightly below the upper surface, the forming of a stagnant layer of solids on the surface begins, and, for example, efficient mixing of the suspension is hampered.

A suitable flow velocity at the outlet end of the first pipe depends on the properties of the suspension. Preferably, the flow velocity is such that the suspension does not jet or spout above the upper surface of the column, because such flow would easily mix more gas to the suspension. Preferably, the suspension merely wells gently over the edge of the outlet end of the pipe. As is clear to a skilled person, the flow velocity can be determined by properly selecting the amount of recirculated suspension flow or the diameter of the first tube, especially the diameter of the outlet end of the tube.

Typically, the flow of recirculated suspension is of the same order of magnitude than the flow of the primary incoming suspension. When the gas content of the suspension is low, the flow of recirculated suspension may be only a small fraction, for example 20 %, of that of the primary incoming suspension. On the other hand, when the gas content is high, the flow of recirculated suspension may be higher, for example, three times higher, than that of that of the primary incoming suspension.

By using the method described above, the gas bubbles separate efficiently from the flowing suspension directly to the air above the column of suspension in the container. Simultaneously, the introduced material spreads over the surface of the column in the container. Thus, the material being earlier on the surface is forced to move downwards, and the material on the surface is continuously changed. Thereby, the formation of a stagnant layer of material is prevented. When using a mixer and means for introducing diluting liquid to the container, the material in the container will eventually be effectively homogenized and diluted.

Advantageously, the outlet end of the first pipe is located in the horizontal level at the center portion of the container so as to distribute the recycled suspension evenly into the container. Preferably, the first pipe has a top portion with an upwards widening shape, which brings about a gentle flow of the spreading suspension, leading to an improved separation of gas. At the same time, such a widening top portion leads to improved distribution of the suspension onto the upper surface. The separated air can be discharged from the container by a pump, or the container may be open so as to let the separated air escape to the atmosphere.

The first pipe may be connected to the container in any suitable way. For example, the first pipe can be connected to the bottom so as to form a standing pillar in the center of the bottom portion of the container. According to another embodiment of the present invention, an extension of the first pipe is connected to a sidewall of the container, and the dilution zone at the bottom of the container may be left free.

The present invention provides a new way of removing gas from a suspension in a container by using especially designed means for introducing recycled suspension back into the container. Additionally, according to an embodiment of the present invention, the first pump used for discharging suspension to the suspension recycling line may comprise means for removing gas from the recycled suspension. The lowering of the gas content of the suspension brings about an improved flow of the discharged suspension and more effective homogenization of the process suspension to be pumped to the next process stage.

The above brief description, as well as further objects, features, and advantages of the present invention will be more fully appreciated by reference to the following detailed description of the currently preferred, but nonetheless illustrative, embodiments of the present invention, taken in conjunction with the accompanying drawings.

### BRIEF DESCRIPTION OF THE DRAWINGS

- FIG. 1: schematically shows a vertical cross section of a first exemplary embodiment of the present invention.
- FIG. 2: schematically shows a vertical cross section of a second exemplary embodiment of the present invention.
- FIG. 3: schematically shows a vertical cross section of a third exemplary embodiment of the present invention.

### DETAILED DESCRIPTION OF THE PREFERRED EMBODIMENTS

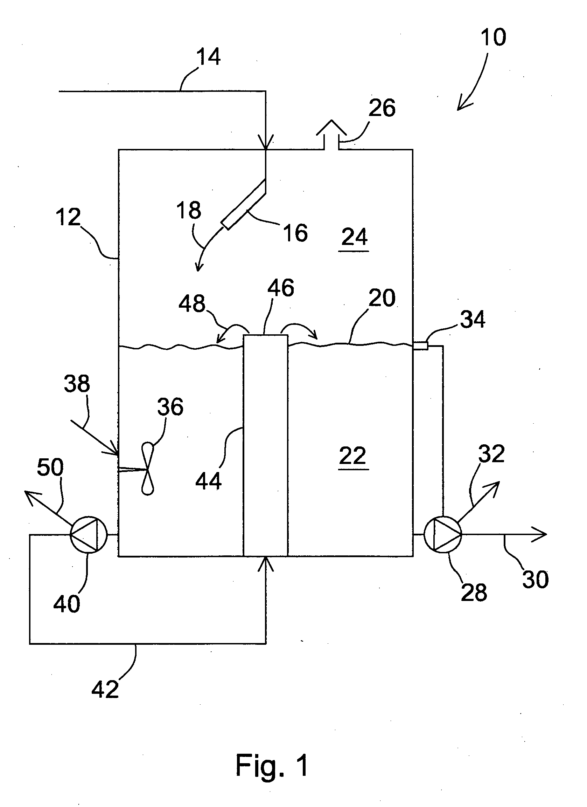

Fig. 1 shows schematically an exemplary apparatus 10 for removing gas from a suspension of liquid and solids in accordance with the present invention. The apparatus comprises a container 12, to which is introduced a flow of gas-containing suspension of liquid and solid particles, for example, low or medium consistency process fluid in wood processing industry, through a feed channel 14. In the apparatus shown in Fig. 1, a spreader device 16 distributes the incoming flow 18 evenly on the upper surface 20 of a column of suspension 22 in the container. The gas phase 24 above the column of suspension is connected to the atmosphere through an opening 26. In some other embodiments of the present invention, the container 12 may have a more or less completely open top, or the container may be closed and connected to the atmosphere only through a gas handling system including a pump.

The suspension can be withdrawn from the container 12 with a primary discharge pump 28 connected near to the bottom of the container 12. The outlet side of the pump 28 is connected to a discharge channel 30 which leads to the following process stage, which may be, for example, washing or screening of the suspension. The pump 28 may be provided with means 32 for removing gas from the pumped suspension. The operation of the pump 28 may advantageously be controlled by a level detector 34 so as to keep the surface level 20 of the suspension 22 constant.

The container 12 may advantageously comprise one or more impellers 36 in order to homogenize the suspension before it is withdrawn from the container. To the container is often arranged also means 38 for introducing diluting liquid, typically water, to be mixed with the suspension in the container. In a typical application, the consistency of the incoming fluid is about 10 %, and it is diluted in the container 12 to a consistency of less than 6 %, most often about 4 - 5 %.

In order to avoid problems due to gas bubbles in pockets formed by the solid particles, for example, fibers, in the suspension, the apparatus comprises, in accordance with the present invention, means, including a recirculating pump 40 and a recirculating channel 42, to recirculate the suspension in the container 12. The recirculating pump 40 is preferably connected near to the bottom of the container 12. The recirculating pump is preferably connected at about the same level as the primary discharge pump 28, but in some applications it may be advantageous to connect the recirculation pump 40 to the container 12 at a somewhat higher level, for example at about 0.5 m higher level, than the primary discharge pump 28.

The suspension is lead from the recirculation channel 42 to a vertical pipe 44 having an upper end 46 extending a predetermined distance above the upper surface 20 of the column of suspension 22. The distance may be, for example, from about 0.05 to about 0.3 m. The recirculated suspension is according to the present invention made to stream gently, more or less as a laminar flow 48, over the edge of the outlet end 46 of the pipe. If the stream 48 were spouted up from the pipe 44, a considerable amount of gas could be mixed with the suspension. When the geometry of the upper end of the pipe 44 and flow velocity of the suspension are selected properly, a large amount of gas in the form of bubbles is separated from the suspension when it enters to the containers. In addition to that, when the incoming suspension, including solids, flows on top of the upper surface 20 of the column of suspension 22 in the container 12, the incoming stream pushes the earlier top layer downwards. Thereby it causes the whole mass of suspension to be continuously moved downwards, so that it can be efficiently homogenized in the lower portion of the container.

In the embodiment of Fig. 1, the recirculating pump 40 is also equipped with means 50 for removing gas from the recirculating suspension. This removal of the gas is not necessary for the operation of the apparatus, but by using this additional method of gas removal, the total removal of gas during the recirculation can be enhanced.

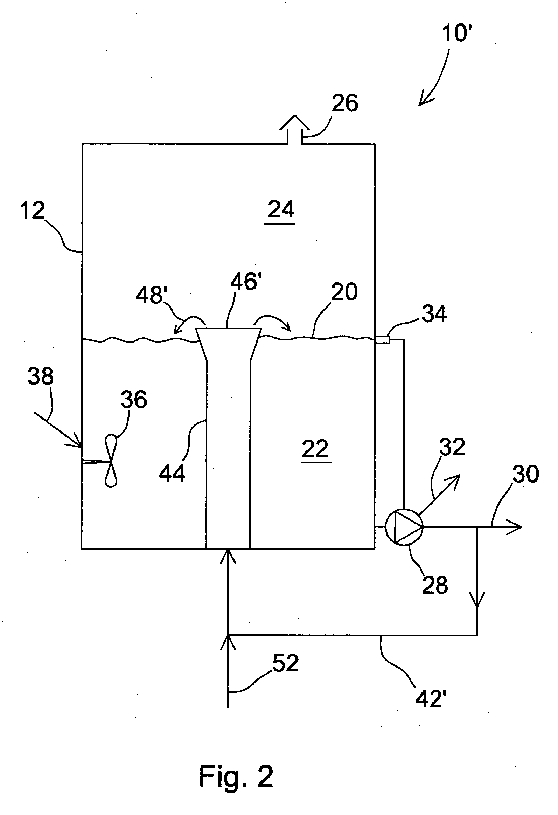

Fig. 2 schematically shows another exemplary apparatus 10' for removing gas from a suspension of liquid and solids in accordance with a second preferred embodiment of the present invention. This embodiment differs from that in Fig. 1 in that the original incoming suspension 52 is not fed to the container 12 through the top, but through the bottom, by using the same vertical feed pipe 44 as used for the reintroduction of the recirculated stream of suspension. This embodiment is economical in the sense that the equipment is more simple and the power required to lift the incoming suspension to the top of the container is saved. In addition to that, a portion of gas in the suspension is removed already at the original introduction thereof to the container 12, and the prevailing average gas content in the container 12 is reduced.

The embodiment of Fig. 2 includes also another possible modification of the invention, wherein there is not a separate recirculation pump, but a sidestream 54 withdrawn from the outlet side of the main discharge pump 28 is recirculated back to the container 12 through a recycle line 42'. This configuration is more economical than that shown in Fig. 1, but it requires a suitable, reliable means to control the share of the recirculated solids, which may be difficult with some types of suspensions.

In Fig. 2 is also shown that the outer end 46' of the pipe 44 has an upwards widening shape, so as to improve the gentle flow of the suspension 48' above the upper surface 20 of the column of suspension 22. The shape of the outer end 46' can be conical, as in Fig. 2, or it can be of any other suitable shape, such as of a smoothly widening shape. Such a widening outlet end can naturally be used with any of the embodiments of the present invention.

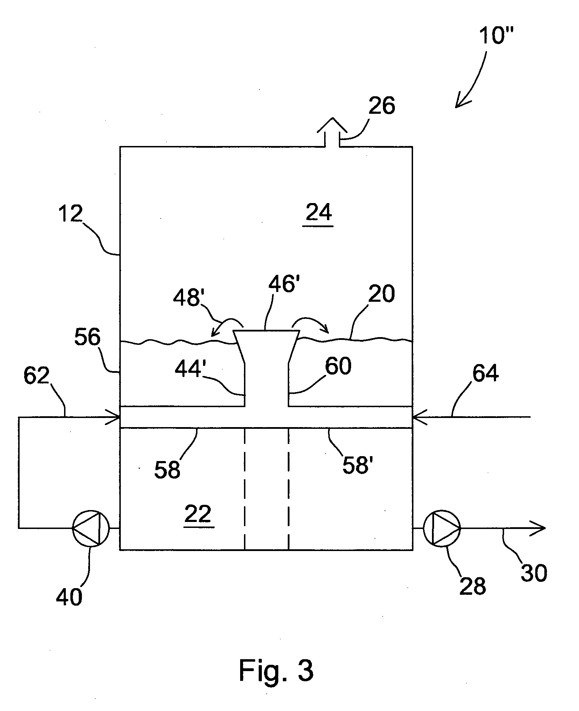

Fig. 3 schematically shows a third exemplary apparatus 10" for removing gas from a suspension of liquid and solids in accordance with a third preferred embodiment of the present invention. According to this embodiment, the recirculated flow is not introduced through the bottom of the container 12, but through a sidewall 56. In this construction, the recirculation pipe 44' has a horizontal first portion 58, connected to the sidewall 56, and a vertical second portion 60, which extends through the upper surface 20. Even if the horizontal portion 58 of the recirculation pipe 44' is connected to the sidewall 56 of the container 12, the vertical portion 60 is preferably supported to the bottom of the container.

When the construction of the recirculation pipe 44' shown in Fig. 3 is used with a system having also the original suspension introduced through the feed pipe 44', the incoming stream and the recirculating stream can be combined outside the container 12, or they can be combined within the container so that they have separate horizontal portions 58, 58' and a common vertical portion 60, as shown in Fig. 3. It is possible that the incoming stream and the recirculated stream have separate vertical portions 60, too.

It should be noted from the above description that the invention has only been described with reference to a few exemplary solutions. As is clear to a skilled person, the features shown in connection with the individual embodiments can also be used in connection with the other embodiments. The solutions of these embodiments are not intended as limiting the invention to the above-mentioned details only, but the invention is limited only by the accompanying claims and the definitions therein.

## Claims

1. A method of removing gas from gas-containing suspension of liquid and solids in a container (12), comprising the steps of:
- introducing gas-containing suspension of liquid and solids into the container (12) so as to form a column of suspension (22) with an upper surface (20) in the container,
- withdrawing a first stream of suspension with a first pump (28, 40) from said column of suspension (22), and
- discharging gas from the container (12),
**characterized in that** the method comprises a further step of
- recycling at least a portion of said first stream of suspension into the container (12) upwards through the outlet end (46, 46') of a vertical first pipe (44, 44'), at a predetermined distance above the upper surface (20) of said column of suspension (22) so as to separate gas from the recycled suspension.

2. A method according to claim 1, **characterized in that** said introducing of gas-containing suspension of liquid and solids is performed through said first pipe (44, 44') at a predetermined distance above the upper surface (20) of the column of suspension (22).

3. A method according to claim 1, **characterized in that** said introducing of gas-containing suspension of liquid and solids into the container (12) is performed via a second pipe below the upper surface of the column of suspension.

4. A method according to claim 1, **characterized in that** said introducing of gas-containing suspension of liquid and solids into the container (12) is performed via a conduit (14, 16) arranged at the upper part of the container above the upper surface (20) of the column of suspension (22).

5. A method according to any of claims 1 - 4, **characterized in that** the outlet end (46, 46') of said first pipe (44, 44') is located in the horizontal level at the center portion of the container (12).

6. A method according to claim 5, **characterized in that** said first pipe (44, 44') has an upmost portion (46') with an upwards widening shape.

7. A method according to any of the preceding claims, **characterized in that** the recycled stream is introduced into the container (12) through the bottom of the container.

8. A method according to any of the preceding claims 1 to 6, **characterized in that** the recycled stream is introduced into the container (12) through a sidewall of the container.

9. A method according to claim 1, **characterized in that** the method comprises a further step of withdrawing a second stream of suspension from the column of suspension with a second pump (28).

10. A method according to claim 1, **characterized in that** the method comprises a further step of removing gas from the first stream of suspension prior to recycling at least a portion of the first stream of suspension into the container (12).

11. A method according to claim 1, **characterized in that** the method comprises a further step of mixing said column of suspension (22) with an impeller (36) in the container (12).

12. A method according to claim 1, **characterized in that** the method comprises a further step of diluting said column of suspension by introducing diluting liquid into the container (12).

13. An apparatus (10, 10', 10") for removing gas from a gas-containing suspension of liquid and solids in a container (12), comprising:
- means (14, 16, 44, 44', 52, 64) for introducing gas-containing suspension of liquid and solids into the container (12) so as to form a column of suspension (22) with an upper surface (20) in the container,
- a first pump (28, 40) for withdrawing a first stream of suspension from said column of suspension (22) in the container (12), and
- means (26) for discharging gas from the container (12),
**characterized by**
- means for recycling at least a portion of said first stream of suspension into the container (12), comprising a vertical first pipe (44, 44') extending upwards at a predetermined distance above the upper surface (20) of said column of suspension (22) for separating gas from the recycled suspension.

14. An apparatus according to claim 13, **characterized in that** said means for introducing gas-containing suspension of liquid and solids into the container (12) comprises said first pipe (44, 44') extending at a predetermined distance above the upper surface (20) of the column of suspension (22).

15. An apparatus according to claim 13, **characterized in that** said means for introducing gas-containing suspension of liquid and solids into the container (12) comprises a second pipe having an outlet end below the upper surface (20) of the column of suspension (22).

16. An apparatus according to claim 13, **characterized in that** said means for introducing gas-containing suspension of liquid and solids into the container comprises a conduit (14, 16) arranged at the upper part of the container (12) for introducing the suspension of liquid and solids above the upper surface (20) of the column of suspension (22).

17. An apparatus according to any of any claims 13 - 16, **characterized in that** the outlet end (46, 46') of said first pipe (44, 44') is located in the horizontal level at the center portion of the container (12).

18. An apparatus according to claim 17, **characterized in that** said first pipe (44') has an upmost portion (46') with an upwards widening shape.

19. An apparatus according to any of claims 13-18, **characterized in that** said means (42, 42') for recycling extends through the bottom of the container (12).

20. An apparatus according any of claims 13 - 18, **characterized in that** said means (62) for recycling extends through a sidewall of the container (12).

21. An apparatus according to claim 13, **characterized in that** the apparatus comprises a second pump (28) for withdrawing a second stream of suspension from the column of suspension (22) in the container (12).

22. An apparatus according to claim 13, **characterized in that** the apparatus comprises means (32, 50) for removing gas from the first stream of suspension prior to recycling at least a portion of the first stream of gas-containing suspension into the container (12).

23. An apparatus according to claim 13, **characterized in that** the apparatus comprises an impeller (36) for mixing said column of suspension (22) in the container (12).

24. An apparatus according to claim 13, **characterized in that** the apparatus comprises means (38) introducing diluting liquid into the container (12).

## Patentansprüche

1. Verfahren zum Entfernen von Gas von einer gashaltigen Suspension aus Flüssigkeit und Feststoffen in einem Behälter (12), mit den Schritten:
- Einführen einer gashaltigen Suspension aus Flüssigkeit und Feststoffen in den Behälter (12), um so eine Suspensionssäule (22) mit einer oberen Fläche (20) in dem Behälter zu bilden,
- Abziehen eines ersten Suspensionsstromes mit einer ersten Pumpe (28, 40) von der Suspensionssäule (22), und
- Austragen von Gas von dem Behälter (12),
**dadurch gekennzeichnet, dass**
das Verfahren einen weiteren Schritt zum
- Rückführen zumindest eines Anteils des ersten Suspensionsstroms in den Behälter (12) aufwärts durch das Auslassende (46, 46') eines vertikalen ersten Rohres (44, 44') mit einer ersten vorbestimmten Distanz über der oberen Fläche (20) der Suspensionssäule (22) umfasst, um so Gas von der rückgeführten Suspension abzuscheiden.

2. Verfahren nach Anspruch 1,
**dadurch gekennzeichnet, dass**
das Einführen einer gashaltigen Suspension aus Flüssigkeit und Feststoffen durch das erste Rohr (44, 44') mit einer vorbestimmten Distanz über der oberen Fläche (20) der Suspensionssäule (22) ausgeführt wird.

3. Verfahren nach Anspruch 1,
**dadurch gekennzeichnet, dass**
das Einführen der gashaltigen Suspension aus Flüssigkeit und Feststoffen in den Behälter (12) über ein zweites Rohr unterhalb der oberen Fläche der Suspensionssäule ausgeführt wird.

4. Verfahren nach Anspruch 1,
**dadurch gekennzeichnet, dass**
das Einführen der gashaltigen Suspension aus Flüssigkeit und Feststoffen in den Behälter (12) über eine Leitung (14, 16) ausgeführt wird, die an dem Oberteil des Behälters über der oberen Fläche (20) der Suspensionssäule (22) angeordnet ist.

5. Verfahren nach einem der Ansprüche 1 bis 4,
**dadurch gekennzeichnet, dass**
das Auslassende (46, 46') des ersten Rohres (44, 44') auf dem horizontalen Niveau an dem Zentralabschnitt des Behälters (12) angeordnet ist.

6. Verfahren nach Anspruch 5,
**dadurch gekennzeichnet, dass**
das erste Rohr (44, 44') einen obersten Abschnitt (46') mit einer sich aufwärts erweiternden Form besitzt.

7. Verfahren nach einem der vorhergehenden Ansprüche,
**dadurch gekennzeichnet, dass**
der rückgeführte Strom in den Behälter (12) durch das Unterteil des Behälters eingeführt wird.

8. Verfahren nach einem der vorhergehenden Ansprüche 1 bis 6,
**dadurch gekennzeichnet, dass**
der rückgeführte Strom in den Behälter (12) durch eine Seitenwand des Behälters eingeführt wird.

9. Verfahren nach Anspruch 1,
**dadurch gekennzeichnet, dass**
das Verfahren einen weiteren Schritt zum Abziehen eines zweiten Suspensionsstromes von der Suspensionssäule mit einer zweiten Pumpe (28) umfasst.

10. Verfahren nach Anspruch 1,
**dadurch gekennzeichnet, dass**
das Verfahren einen weiteren Schritt zum Entfernen von Gas von dem ersten Suspensionsstrom vor einem Rückführen von zumindest einem Anteil des ersten Suspensionsstromes in den Behälter (12) umfasst.

11. Verfahren nach Anspruch 1,
**dadurch gekennzeichnet, dass**
das Verfahren einen weiteren Schritt zum Mischen der Suspensionssäule (22) mit einem Flügelrad (36) in dem Behälter (12) umfasst.

12. Verfahren nach Anspruch 1,
**dadurch gekennzeichnet, dass**
das Verfahren einen weiteren Schritt zum Verdünnen der Suspensionssäule durch Einführen einer Verdünnungsflüssigkeit in den Behälter (12) umfasst.

13. Vorrichtung (10, 10', 10") zum Entfernen von Gas von einer gashaltigen Suspension aus Flüssigkeit und Feststoffen in einem Behälter (12), umfassend:
- ein Mittel (14, 16, 44, 44', 52, 64) zum Einführen der gashaltigen Suspension aus Flüssigkeit und Feststoffen in den Behälter (12), um so eine Suspensionssäule (22) mit einer oberen Fläche (20) in dem Behälter zu bilden,
- eine erste Pumpe (28, 40) zum Abziehen eines ersten Suspensionsstroms aus der Suspensionssäule (22) in dem Behälter (12), und
- ein Mittel (26) zum Austrag von Gas von dem Behälter (12),
**gekennzeichnet durch**
- ein Mittel zum Rückführen von zumindest einem Anteil des ersten Suspensionsstroms in den Behälter (12), das ein vertikales erstes Rohr (44, 44') umfasst, das sich aufwärts mit einer vorbestimmten Distanz über der oberen Fläche (20) der Suspensionssäule (22) zum Abscheiden von Gas von der rückgeführten Suspension erstreckt.

14. Verfahren nach Anspruch 13,
**dadurch gekennzeichnet, dass**
das Mittel zum Einführen der gashaltigen Suspension aus Flüssigkeit und Feststoffen in den Behälter (12) umfasst, dass sich das erste Rohr (44, 44') mit einer vorbestimmten Distanz über der oberen Fläche (20) der Suspensionssäule (22) erstreckt.

15. Vorrichtung nach Anspruch 13,
**dadurch gekennzeichnet, dass**
das Mittel zum Einführen einer gashaltigen Suspension aus Flüssigkeit und Feststoffen in den Behälter (12) ein zweites Rohr umfasst, das ein Auslassende unterhalb der oberen Fläche (20) der Suspensionssäule (22) besitzt.

16. Vorrichtung nach Anspruch 13,
**dadurch gekennzeichnet, dass**
das Mittel zum Einführen einer gashaltigen Suspension aus Flüssigkeit und Feststoffen in den Behälter eine Leitung (14, 16) umfasst, die an dem Oberteil des Behälters (12) zum Einführen der Suspension aus Flüssigkeit und Feststoffen über der oberen Fläche (20) der Suspensionssäule (22) angeordnet ist.

17. Vorrichtung nach einem der Ansprüche 13 bis 16,
**dadurch gekennzeichnet, dass**
das Auslassende (46, 46') des ersten Rohres (44, 44') auf dem horizontalen Niveau an dem Zentralabschnitt des Behälters (12) angeordnet ist.

18. Vorrichtung nach Anspruch 17,
**dadurch gekennzeichnet, dass**
das erste Rohr (44') einen obersten Abschnitt (46') mit einer sich aufwärts erweiternden Form besitzt.

19. Vorrichtung nach einem der Ansprüche 13 bis 18,
**dadurch gekennzeichnet, dass**
sich das Mittel (42, 42') zum Rückführen durch das Unterteil des Behälters (12) erstreckt.

20. Vorrichtung nach einem der Ansprüche 13 bis 18,
**dadurch gekennzeichnet, dass**
sich das Mittel (62) zum Rückführen durch eine Seitenwand des Behälters (12) erstreckt.

21. Vorrichtung nach Anspruch 13,
**dadurch gekennzeichnet, dass**
die Vorrichtung eine zweite Pumpe (28) zum Abziehen eines zweiten Suspensionsstroms von der Suspensionssäule (22) in dem Behälter (12) umfasst.

22. Vorrichtung nach Anspruch 13,
**dadurch gekennzeichnet, dass**
die Vorrichtung ein Mittel (32, 50) zum Entfernen von Gas von dem ersten Suspensionsstrom vor einem Rückführen von zumindest einem Anteil des ersten Stromes aus gashaltiger Suspension in den Behälter (12) umfasst.

23. Vorrichtung nach Anspruch 13,
**dadurch gekennzeichnet, dass**
die Vorrichtung ein Flügelrad (36) zum Mischen der Suspensionssäule (22) in dem Behälter (12) umfasst.

24. Vorrichtung nach Anspruch 13,
**dadurch gekennzeichnet, dass**
die Vorrichtung ein Mittel (38) zum Einführen einer Verdünnungsflüssigkeit in den Behälter (12) umfasst.

## Revendications

1. Procédé de dégazage d'une suspension de liquide et de solides contenant du gaz dans un contenant (12), comprenant les étapes de :
introduire une suspension de liquide de solides contenant du gaz dans un contenant (12) de manière à former une colonne de suspension (22) avec une surface supérieure (20) dans le contenant,
retirer un premier écoulement de la suspension avec une première pompe (28, 40) de ladite colonne de suspension (22), et
évacuer le gaz du contenant (12),
**caractérisé en ce que** le procédé comprend l'étape ultérieure consistant à
recycler au moins une portion dudit premier écoulement de suspension dans le contenant (12) vers le haut à travers l'extrémité de sortie (46, 46') d'un premier tube vertical (44, 44') à une distance prédéterminée au-dessus de la surface supérieure (20) de ladite colonne de suspension (22) de manière à séparer le gaz de la suspension recyclée.

2. Procédé selon la revendication 1, **caractérisé en ce que** ladite introduction de la suspension de liquide et de solides contenant du gaz est exécutée à travers ledit premier tube (44, 44') à une distance prédéterminée au-dessus de la surface supérieure (20) de la colonne de suspension (22).

3. Procédé selon la revendication 1, **caractérisé en ce que** ladite introduction de la suspension de liquide et de solides contenant du gaz dans le contenant (12) est exécutée via un deuxième tube en dessous de la surface supérieure de la colonne de suspension.

4. Procédé selon la revendication 1, **caractérisé en ce que** ladite introduction d'une suspension de liquide et de solides contenant du gaz dans le contenant (12) est exécutée via un conduit (14, 16) agencé à la partie supérieure du contenant au-dessus de la surface supérieure (20) de la colonne de suspension (22).

5. Procédé selon l'une quelconque des revendications 1 à 4, **caractérisé en ce que** l'extrémité de sortie (46, 46') dudit premier tube (44, 44') se situe au niveau horizontal à la portion centrale du contenant (12).

6. Procédé selon la revendication 5, **caractérisé en ce que** ledit premier tube (44, 44') possède une portion la plus supérieure (46') d'une forme s'élargissant vers le haut.

7. Procédé selon l'une quelconque des revendications précédentes, **caractérisé en ce que** l'écoulement recyclé est introduit dans le contenant (12) à travers le fond du contenant.

8. Procédé selon l'une quelconque des revendications précédentes 1 à 6, **caractérisé en ce que** l'écoulement recyclé est introduit dans le contenant (12) à travers une paroi latérale du contenant.

9. Procédé selon la revendication 1, **caractérisé en ce que** le procédé comprend l'étape ultérieure consistant à retirer un deuxième écoulement de la suspension de la colonne de suspension avec une deuxième pompe (28).

10. Procédé selon la revendication 1, **caractérisé en ce que** le procédé comprend une étape ultérieure consistant à retirer du gaz du premier écoulement de la suspension avant le recyclage d'au moins une portion du premier écoulement de la suspension dans le contenant (12).

11. Procédé selon la revendication 1, **caractérisé en ce que** le procédé comprend une étape ultérieure consistant à mélanger ladite colonne de suspension (22) avec un rotor (36) dans le contenant (12).

12. Procédé selon la revendication 1, **caractérisé en ce que** le procédé comprend une étape ultérieure consistant à diluer ladite colonne de suspension en introduisant un liquide de dilution dans le contenant (12).

13. Appareil (10, 10', 10") pour le dégazage d'une suspension de liquide et de solides contenant du gaz dans un contenant (12), comprenant :
- des moyens (14, 16, 44, 44', 52, 64) pour introduire une suspension de liquide et de solides contenant du gaz dans le contenant (12) de manière à former une colonne de suspension (22) avec une surface supérieure (20) dans le contenant,
- une première pompe (28, 40) pour le retrait d'un premier écoulement de la suspension de ladite colonne de suspension (22) dans le contenant (12), et
- des moyens (26) pour évacuer le gaz du contenant (12), **caractérisé par**
- des moyens pour le recyclage d'au moins une portion dudit premier écoulement de la suspension dans le contenant (12), comprenant un premier tube vertical (44, 44') s'étendant vers le haut à une distance prédéterminée au-dessus de la surface supérieure (20) de ladite colonne de suspension (22) pour séparer le gaz de la suspension recyclée.

14. Appareil selon la revendication 13, **caractérisé en ce que** ledit moyen pour introduire la suspension de liquide et de solides contenant du gaz dans le contenant (12) comprend ledit premier tube (44, 44') s'étendant à une distance prédéterminée au-dessus de la surface supérieure (20) de la colonne de suspension (22).

15. Appareil selon la revendication 13, **caractérisé en ce que** ledit moyen pour introduire la suspension de liquide et de solides contenant du gaz dans le contenant (12) comprend un deuxième tube ayant une extrémité de sortie en dessous de la surface supérieure (20) de la colonne de suspension (22).

16. Appareil selon la revendication 13, **caractérisé en ce que** ledit moyen pour introduire la suspension de liquide et de solides contenant du gaz dans le contenant comprend un conduit (14, 16) agencé à la partie supérieure du contenant (12) pour introduire la suspension de liquide et de solides au-dessus de la surface supérieure (20) de la colonne de suspension (22).

17. Appareil selon l'une quelconque des revendications 13 à 16, **caractérisé en ce que** l'extrémité de sortie (46, 46') dudit premier tube (44, 44') est située au niveau horizontal à la portion centrale du contenant (12).

18. Appareil selon la revendication 17, **caractérisé en ce que** ledit premier tube (44') possède une portion la plus supérieure (46') d'une forme s'élargissant vers le haut.

19. Appareil selon l'une quelconque des revendications 13 à 18, **caractérisé en ce que** ledit moyen (42, 42') pour le recyclage s'étend à travers le fond du contenant (12).

20. Appareil selon l'une quelconque des revendications 13 à 18, **caractérisé en ce que** ledit moyen (62) pour le recyclage s'étend à travers une paroi latérale du contenant (12).

21. Appareil selon la revendication 13, **caractérisé en ce que** l'appareil comprend une deuxième pompe (28) pour le retrait d'un deuxième écoulement de la suspension de la colonne de suspension (22) dans le contenant (12).

22. Appareil selon la revendication 13, **caractérisé en ce que** l'appareil comprend des moyens (32, 50) pour le retrait du gaz du premier écoulement de la suspension avant le recyclage d'au moins une portion du premier écoulement de la suspension contenant du gaz dans le contenant (12).

23. Appareil selon la revendication 13, **caractérisé en ce que** l'appareil comprend un rotor (36) pour mélanger ladite colonne de suspension (22) dans le contenant (12).

24. Appareil selon la revendication 13, **caractérisé en ce que** l'appareil comprend un moyen (38) introduisant un liquide de dilution dans le contenant (12).
